# EUROPEAN PATENT APPLICATION

(11) **EP 4 566 789 A1**
(43) Date of publication of application: **11.06.2025**
(21) Application number: 24217717.8
(22) Date of filing: 05.12.2024
(51) Int. Cl.: B29C 45/00, B29C 45/04, B29C 45/16, B29C 45/27, B29C 45/33, B29C 45/26, B29C 45/32, B29L 31/00

(54) **ARTICLE MANUFACTURING METHOD**

(30) Priority: 08.12.2023 JP 2023207859
(71) Applicant: CANON KABUSHIKI KAISHA, Tokyo 146-8501 (JP)
(72) Inventor: HASEGAWA, Shuichi, Tokyo (JP); YAMAGUCHI, Yukuo, Tokyo (JP); SATO, Ryo, Tokyo (JP); YAMAMOTO, Daiki, Tokyo (JP); KAMAGATA, Tomoaki, Tokyo (JP); IIMURA, Kazunori, Tokyo (JP); KAYABA, Satoshi, Tokyo (JP)
(74) Representative: WESER & Kollegen Patentanwälte PartmbB

(57) **Abstract**

Provided is an article manufacturing method that can support complicated molding in molding performed using a hot runner with a valve gate system. To this end, a mold insert (37) of a first mold (34) provided with an injection unit (30, 33) is configured to move.

The article manufacturing method, comprises:

molding a first product (1) by closing a first mold onto a second mold (35) and injecting molten resin into a first mold (34) insert of the first mold wherein at least one injection unit (30) provided at the first mold injects the molten resin;

joining the first product to a second molded product (2) at the second mold (35);

separating a first plate (31) including the first mold (34) insert from the first mold (34), as the first mold (34) and the second mold (35) are opened; and

moving the first mold insert (37) to a position where the first product and the second molded product (2) face each other.

## Description

### BACKGROUND

### Field

The present disclosure relates to an article manufacturing method.

### Description of the Related Art

Japanese Patent Laid-Open No. S62-087315 discusses a method in which a mold insert including one of two molded products molded by primary molding is slid by a drive unit to make the two molded articles molded by the primary molding face each other, and secondary molding is performed after re-closing the molds. The method in Japanese Patent Laid-Open No. S62-087315 uses an injection unit in a cold runner, and uses an injection unit in a cold runner that produces scrap such as sprues and runners. Also, gate cutting in the molding process extends the molding cycle time, which may lower productivity.

For these reasons, a hot runner, which is a runner-less molding system, is used more often in recent years in order to meet the demands for reduced waste. i.e., environment friendliness and to mitigate lowering of productivity. There are two gating systems for hot runners: an open gate system, where the gate for supplying molten resin is open at all times, and a valve gate system, where the gate is opened before injection and closed after injection. In recent years, the valve gate system is often employed for reasons of prevention of dripping and stringing of molten resin in order to achieve stable weights of products, clean finished appearances, and the like.

In order to employ a hot runner and perform complicated joining within molds, sliding of a mold insert needs to be performed at the mold provided with the injection unit as well. However, in a mold provided with an injection unit employing a valve gate system, the gate-closing valve interferes with the mold insert and hinders the mold insert from sliding freely. Thus, conventional methods cannot support complicated molding.

### SUMMARY

Thus, the present disclosure provides an article manufacturing method capable of supporting complicated molding in molding performed using a hot runner with a valve gate system.

The present invention provides an article manufacturing method as specified in claims 1 to 15.

The present disclosure can provide an article manufacturing method capable of supporting complicated molding in molding performed using a hot runner with a valve gate system.

Further features of the present disclosure will become apparent from the following description of exemplary embodiments with reference to the attached drawings.

### BRIEF DESCRIPTION OF THE DRAWINGS

Figs. 1A, 1B, and 1C are diagrams showing steps of joining molded products with molten resin;
Figs. 2A, 2B, 2C, and 2D are diagrams showing conventional molding steps in which a mold insert is slid on a mold;
Figs. 3A, 3B, 3C, 3D, and 3E are diagrams showing the process of molding in an injection molding apparatus;
Figs. 4A, 4B, 4C, 4D, and 4E are diagrams showing the process of molding in an injection molding apparatus of a modification;
Figs. 5A and 5B are sectional views showing an injection unit and part of a mold insert;
Figs. 6A, 6B, 6C, 6D, and 6E are diagrams showing the process of molding in an injection mold apparatus;
Figs. 7A and 7B are close-up views of Figs. 6C and 6D;
Fig. 8 is an overall view showing an inject printer;
Figs. 9A, 9B, and 9C are diagrams showing a liquid storage container;
Figs. 10A, 10B, and 10C are diagrams showing a method for manufacturing a connection member;
Figs. 11A and 11B are sectional views showing a first molded product, a second molded product, and a third molded product; and
Figs. 12A, 12B, 12C, 12D, and 12E are diagrams showing other embodiments.

### DESCRIPTION OF THE EMBODIMENTS

A first embodiment of the present disclosure is described below with reference to the drawings.

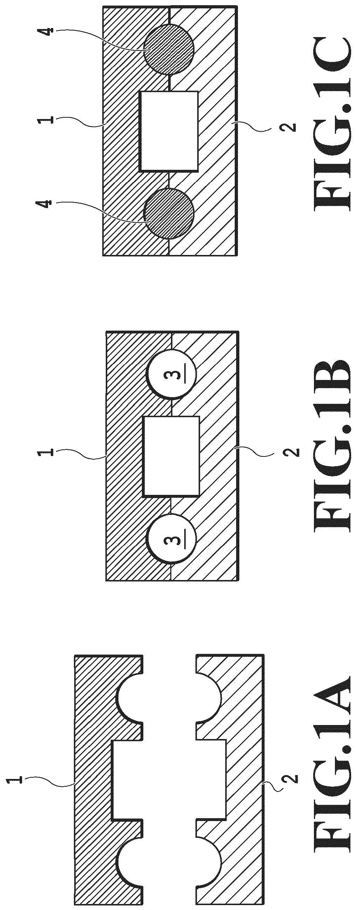

Figs. 1A to 1C are diagrams showing typical steps of joining molded products together with molten resin. A first product 1 and a second product 2 that are molded by primary molding to face each other as shown in Fig. 1A. As shown in Fig. 1B, the first product 1 and the second product 2 are closed together and assembled, forming internal spaces 3. Then, as shown in Fig. 1C, molten resin 4 is injected into the internal spaces 3 in secondary molding, e.g., by, to join the first molded product 1 and the second molded product 2.

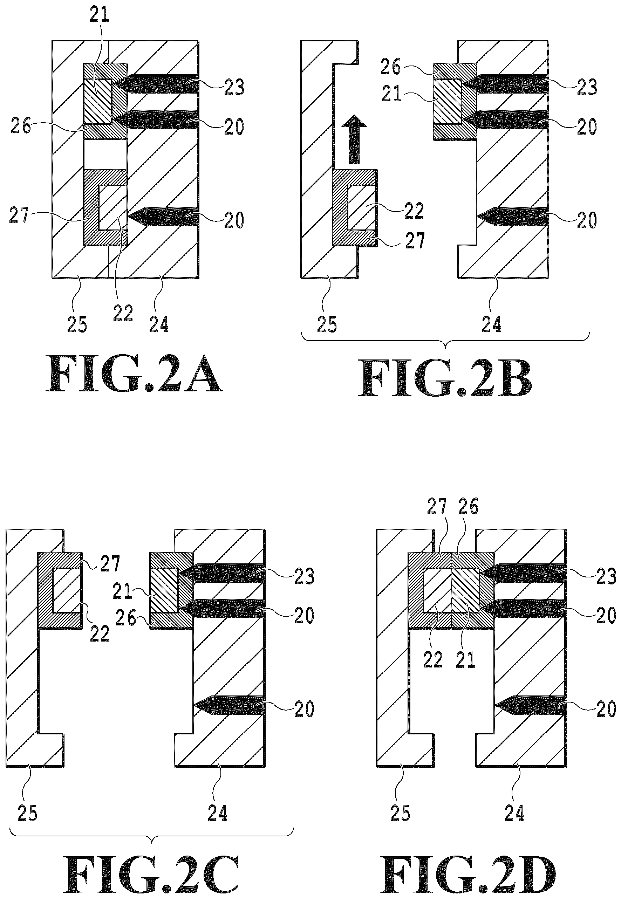

Figs. 2A to 2D are diagrams showing a conventional configuration. Figs. 2A to 2D show steps of molding using a first mold 24 with injection units and a second mold 25 lacing an injection unit, in which a mold insert is slid on the second mold. As shown in Fig. 2A, in the primary molding, a first molded product 21 and a second molded product 22 are molded by injection of molten resin from injection units 20. In Figs. 2B and 2C, the first mold 24 and the second mold 25 are opened, and a mold insert 27 of the second mold 25 that includes the second molded product 22 is slid to a position facing a mold insert 26 including the first molded product 21. In Fig. 2D, the first mold 24 and the second mold 25 are closed, and as the secondary molding, molten resin is injected from an injection unit 23, joining the first molded product 21 and the second molded product 22.

However, in such a conventional configuration, the mold insert 26 of the first mold 24 provided with the injection units 20, 23 is in engagement with valves of the injection units 20, 23, and the mold insert 26 cannot be slid and moved due to interference with the valves. For this reason, a conventional method may not be able to support complicated molding. The following describes a method of the present embodiment that can move the mold insert 26 of the first mold 24 provided with the injection units 20, 23 and thereby support complicated molding.

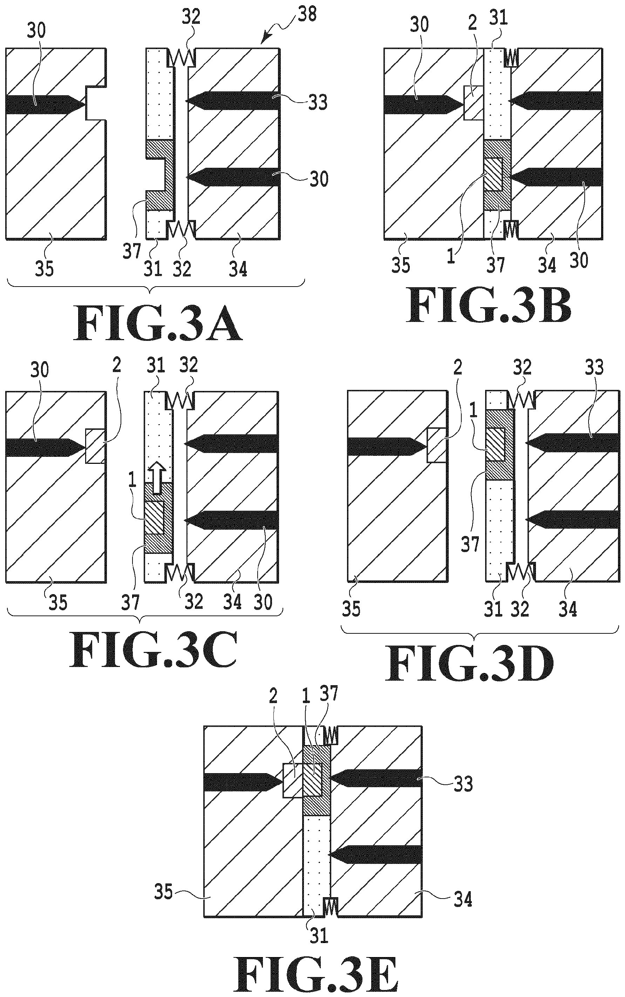

Figs. 3A to 3E are diagrams showing the process of molding in an injection molding apparatus 38 of the present embodiment. The following describes steps of the process of molding of the present embodiment step by step. For clarity, a description of a driving device for moving the molds is not repeated, for clarity. The injection molding apparatus 38 of the present embodiment includes, between a first mold 34 and a second mold 35, a plate 31 having a mold insert 37.

Fig. 3A illustrates the first mold 34 and the second mold 35 molds in an open state. Fig. 3B illustrates the first mold 34 and the second mold 35 in a closed state. Closing the first mold 34 and the second mold 35 brings the mold insert 37 at the plate 31 and a valve of the injection unit 30 provided at the first mold 34 into engagement with each other and therefore creates a moldable state. In the closed state, molten resin is injected from injection units 30, to mold the first molded product 1 and the second molded product 2 as the primary molding. After the primary molding, the first mold 34 and the second mold 35 are opened, as shown in Fig. 3C. As the first mold 34 and the second mold 35 are opened, as shown in Fig. 3C, the plate 31 moves away from the first mold 34 due to a force (action) of springs 32, removing the valve of the injection unit 30 and the mold insert 37 from engagement.

In the configuration in which the plate 31 is moved away or separated from the first mold 34 due to the force of the springs 32 upon opening of the molds, the mold insert 37 is spaced away, i.e., apart, from the injection unit 30 upon opening of the molds, without use of a driving source. The plate 31 includes a mechanism (a moving unit) for sliding the mold insert 37 and is thus capable of sliding the mold insert 37. Drivers for moving the plate 31 away from the first mold 34 may include, for example, an air cylinder, an electric cylinder, a hydraulic unit, and the like, and the selected driver may be based on considerations that include responsivity to mold opening/closing operations, the size of a molded product, and the configuration of the mold.

As shown in Fig. 3D, the mold insert 37 including the first molded product 1 slides and moves to a position facing the second molded product 2. The mold insert 37 may, for example, slide along a guide provided at the plate 31 using an air cylinder or the like. Also, a tertiary molding, a quaternary molding, and the like may be added while moving the mold insert 37. In such case, the mold insert 37 may be operated using, e.g., a servomotor capable of changing the slide position of the mold insert 37 to any given position. A method for moving the mold insert 37 is not limited to sliding the mold insert 37 and may include rotating the plate 31. In a case of moving the mold insert 37 by rotation, the plate 31 may be operated using, e.g., a servomotor capable of changing the rotation position to any given position or a configuration combining a rack and pinion and a cylinder.

As shown in Fig. 3E, the first mold 34 and the second mold 35 are closed. Closing the molds sandwiches the plate 31 between the first mold 34 and the second mold 35, and brings the mold insert 37 and a valve of an injection unit 33 into engagement. Closing the molds also assembles the first molded product 1 in the mold insert 37 and the second molded product 2 together. The secondary molding is performed by injection of molten resin from the injection unit 33, with the first molded product 1 joined with the second molded product 2.

The present embodiment in which a mold insert is slid at the mold provided with injection units is useful in a case where a molded product is small. Because of the unit pitch between the injection units to mold small products, the injection unit 20 and the injection unit 23 cannot be disposed side by side for a single mold insert (see the mold insert 26 in Fig. 2A). By contrast, in the present embodiment where the mold insert is slid at the mold provided with the injection units, the injection units can be disposed away from each other, and therefore, a small product can also be molded.

In conventional molding using a first mold and a second mold neither of which has a sliding mechanism, a first molded product and a second molded product are molded in the primary molding, and the second molded product is removed from the mold insert and attached to a position facing the first molded product to perform the secondary molding. In such a conventional method, in the removal of the second molded product from the mold insert after the primary molding, the second molded product is ejected and removed using an ejector pin or the like, which leaves an ejection mark on the second molded product.

By contrast, in the present embodiment, the secondary molding can be performed after making the first molded product and the second molded product face each other without removing any of the molded products formed by the primary molding, and therefore, no ejection mark is left on the molded products.

Also, in the conventional configuration described using Figs. 2A to 2D, the secondary molding can be performed without removing any of the molded products formed by the primary molding. However, to remove a one-piece molded product joined by the secondary molding, the molded product left in the second mold 25 (see Fig. 2A) is ejected and removed using an ejector pin or the like, which leaves an ejection mark on the molded product.

By contrast, in the present embodiment, to remove a one-piece molded product from the mold insert 37 at the plate 31 moved away from the first mold 34 (see Fig. 3A) after the secondary molding, the molded product is removed not by ejection but by using a robot or the like, which leaves no ejection mark on the molded product.

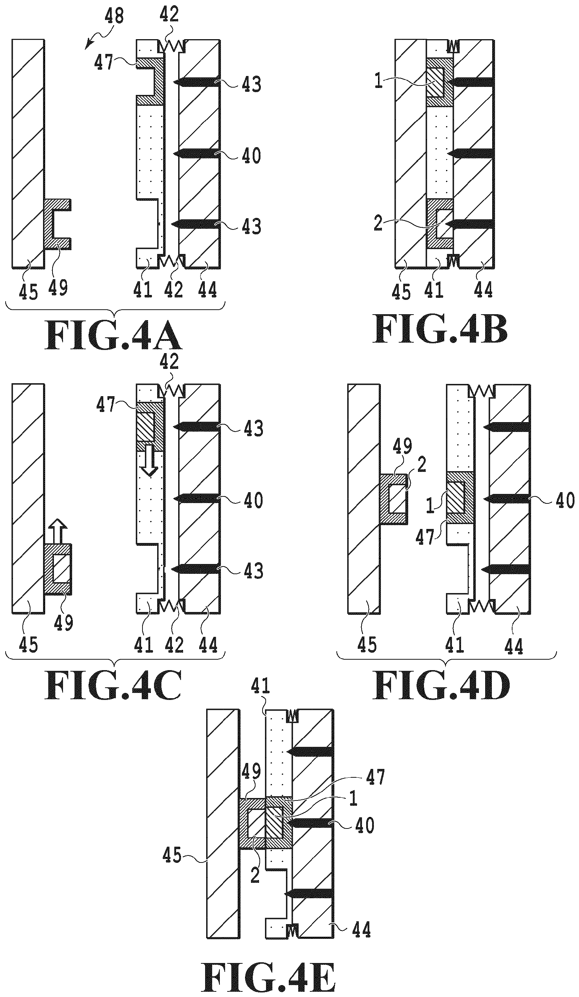

Figs. 4A to 4E are diagrams showing the process of molding in an injection molding apparatus 48 of a modification of the present embodiment. The following describes steps of the process of molding of the present modification. Described in Figs. 4A to 4E is the configurations of the molds in the injection molding apparatus 48. For clarity, a description of a driving device for moving the molds is not repeated, for clarity. In addition to having the configuration of the above described embodiment, the present modification is configured such that the mold insert in the second mold can also move.

In the injection molding apparatus 48, a mold insert 47 of a first mold 44 and a mold insert 49 of a second mold 45 are both configured to be movable. As shown in Fig. 4A, as described with reference to Figs. 3A to 3E, even though the first mold 44 is provided with injection units 40, 43, because a plate 41 is spaced apart from the first mold 44, the mold insert 47 can be moved while keeping distance from the injection units 40, 43. In addition, because the second mold 45 is not provided with any injection unit, the mold insert 49 of the second mold 45 can move.

As shown in Fig. 4B, with the first mold 44 and the second mold 45 closed, the primary molding is performed to mold the first molded product 1 and the second molded product 2. For the mold insert 47 and the mold insert 49, the primary molding is performed using the injection units 43 provided in the first mold 44. After the primary molding, as shown in Fig. 4C, the first mold 44 and the second mold 45 are opened. As a result of opening the molds, the plate 41 is spaced apart from the first mold 44. In this state, the mold insert 47 of the first mold 44 and the mold insert 49 of the second mold 45 are moved (slid) to positions corresponding to the injection unit 40 used for the secondary molding. The mold insert 47 of the first mold 44 can move because the plate 41 is separated from the first mold 44. Fig. 4D shows a state where the mold insert 47 of the first mold 44 and the mold insert 49 of the second mold 45 have finished moving. In the state in Fig. 4D, the mold insert 47 of the first mold 44 and the mold insert 49 of the second mold 45 face each other. In this state, the first mold 44 and the second mold 45 are closed as shown in Fig. 4E to perform the secondary molding using the injection unit 40, joining the first molded product 1 and the second molded product 2. A method for moving the mold insert 47 is not limited to sliding the mold insert 47 and may be rotating the plate 41. For rotation, the plate 41 may operate using, e.g., a servomotor capable of changing the rotation position to any given position or a configuration combining a rack and pinion and a cylinder.

In this way, the mold insert 47 of the first mold 44 provided with the injection units 40, 43 is configured to move. This enables provision of an article manufacturing method and a manufacturing apparatus that can support complicated molding in molding performed using a hot runner with a valve gate system.

A second embodiment of the present disclosure is described below with reference to the drawings. The present embodiment has the same basic configuration as the first embodiment, and the following describes only configurations characteristic to the present embodiment. For clarity, similar configurations are incorporated by reference, to avoid unnecessary repetition.

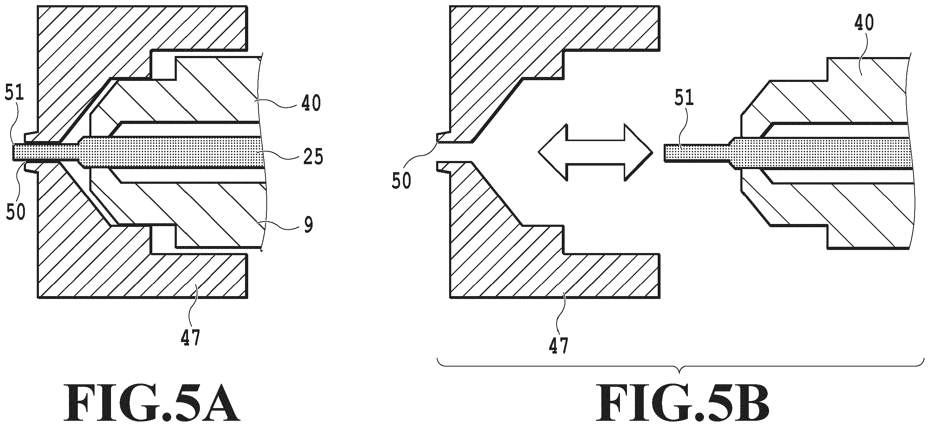

Figs. 5A and 5B are sectional views showing part of the mold insert 47 assembled with the injection unit 40 (Fig. 4A) in the first embodiment. Fig. 5A shows a state where the injection unit 40 and the mold insert 47 are assembled, and Fig. 5B shows a state where the injection unit 40 and the mold insert 47 are separated from each other. The description of the injection unit 40 and the mold insert 47 applies to the injection unit 40 and the mold insert 49.

The mold insert 47 has a needle hole 50 into which to insert a needle pin 51 at the tip of the injection unit 40. The gap between the needle hole 50 and the needle pin 51 assembled together is narrow in order to reduce the amount of molten resin injected from the injection unit 40 that may enter the gap. Thus, with the configuration in the first embodiment, insertion and removal of the needle pin 51 into and from the needle hole 50 are repeated upon opening and closing of the first mold 44 and the second mold 45, which may wear the needle pin 51 away. Thus, the present embodiment has a configuration for mitigating wear of the needle pin 51 caused upon closing and opening of the first mold 44 and the second mold 45. The following describes the configuration for mitigating wear of the needle pin 51.

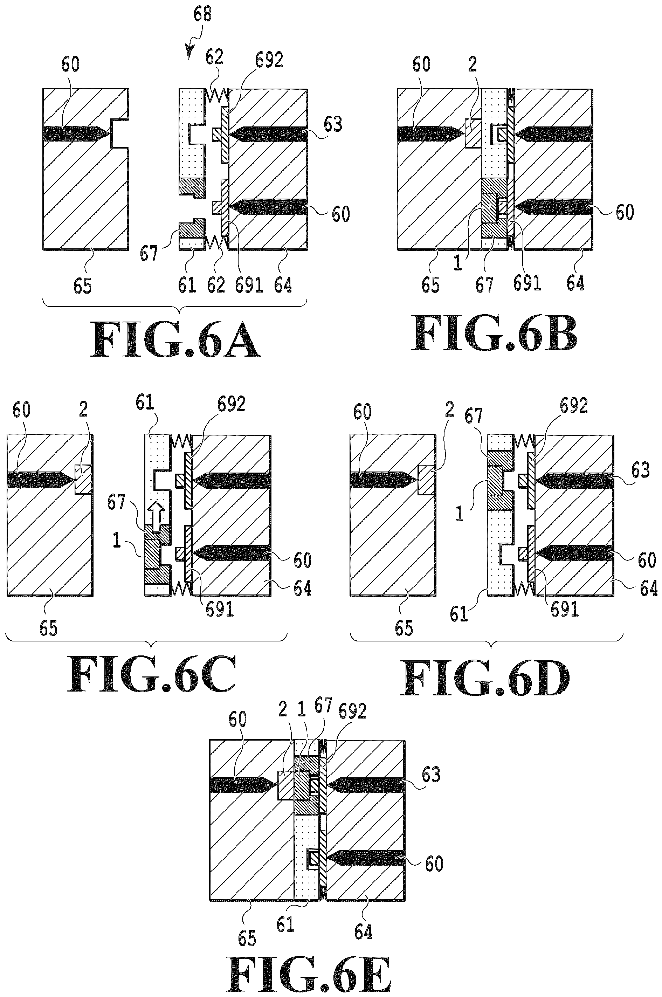

Figs. 6A to 6E are diagrams showing the process of molding in an injection molding apparatus 68 of the present embodiment. The following describes the steps of process of molding of the present embodiment. Described using Figs. 6A to 6E are configurations of the molds in the injection molding apparatus 68, and a description of a driving device for moving the molds is not repeated, for clarity.

In the injection molding apparatus 68 of the present embodiment, a mold insert is split into a mold insert 67 for housing a molded product, a mold insert 691 (first separate mold insert) that abuts against an injection unit (an injection unit A) 60, and a mold insert 692 (second separate mold insert) that abuts against an injection unit (an injection unit B) 63. The mold insert 691 covers an injection end portion of the injection unit 60, and the mold insert 692 covers an injection end portion of the injection unit 63. In this way, the mold insert is split into the mold insert 67 for housing a molded product, the mold insert 691 that abuts against the injection unit 60, and the mold insert 692 that abuts against the injection unit 63. Then, upon opening and closing of a first mold 64 and a second mold 65, insertion and removal are performed not between the mold insert and the injection unit, but between the mold inserts. This mitigates wear of the needle pin 51.

In the event where the first mold 64 and the second mold 65 that are open, as shown in Fig. 6A, are closed, as shown in Fig. 6B, the mold insert 67 and the mold insert 691 are assembled together. Because the injection unit 60 abuts against the mold insert 691, the injection unit 60 can perform injection to the mold insert 67. The primary molding is thus performed to form the first molded product 1 at the first mold 64 and to form the second molded product 2 at the second mold 65. As the first mold 64 and the second mold 65 are opened after that as shown in Fig. 6C, the first mold 64 and a plate 61 move away from each other, moving the mold insert 67 away from the mold insert 691.

As shown in Fig. 6D, the mold insert 67 is slid so that the mold insert 67 including the first molded product 1 may move to a position facing the second molded product 2. After that, as shown in Fig. 6E, the first mold 64 and the second mold 65 are closed. Closing the molds brings the plate 61 into a state of being sandwiched by the first mold 64 and the second mold 65, and the mold insert 67 and the mold insert 692 are brought into engagement. Closing the molds also allows the first molded product 1 in the mold insert 67 and the second molded product 2 to be assembled together. The secondary molding is performed by injection of molten resin from the injection unit 63, joining the first molded product 1 and the second molded product 2.

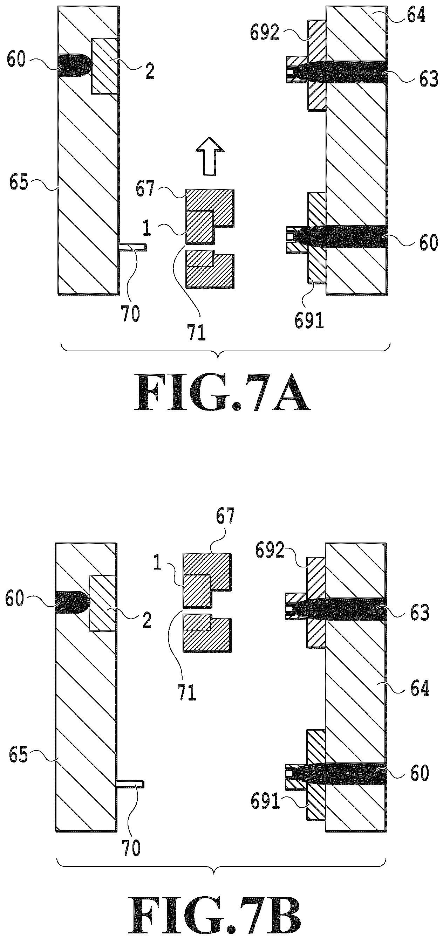

Figs. 7A and 7B are close-up views of Figs. 6C and 6D. For clarity, Figs. 7A and 7B omit the plate 61, so that the state of the mold insert 67 may be understood more easily. The mold insert for the mold with the injection units 60, 63 is split into the mold insert 67 and the mold insert 691, and the mold insert 67 and the mold insert 691 are brought into and out of abutment by precise positioning of the molds. As for the mold insert 692, similarly, the mold insert 67 and the mold insert 692 are brought into and out of abutment by precise positioning of the molds.

The second mold 65 includes a flow channel formation member 70, and in the primary molding, the flow channel formation member 70 forms a flow channel 71 for the secondary molding inside the first molded product 1. In the secondary molding, molten resin is injected into the flow channel 71 from the injection unit 63 to join the first molded product 1 and the second molded product 2.

The flow channel 71 is provided at a position to function as the gate of the injection unit 63 after the mold insert 67 moves to the position facing the mold insert 692 where the secondary molding is performed.

Although a bulging streak of resin, i.e. an insert line, may be left on the first molded product 1 housed in the mold insert 67 at a location where the mold insert 67 and the mold insert 691 abut against each other, this insert line can be minimized by mold alignment.

The method for joining the first molded product 1 and the second molded product 2 described in the present embodiment is also used in Figs. 3A to 3E and Figs. 4A to 4E described in the first embodiment. Specifically, a flow channel is formed in the first molded product in the primary molding, and molten resin is injected into the thus formed flow channel.

In this way, the present embodiment is configured such that the mold insert of the first mold 64 provided with the injection units 60, 63 is split and moved. This enables provision of an article manufacturing method and a manufacturing apparatus that can support complicated molding in molding performed using a hot runner with a valve gate system.

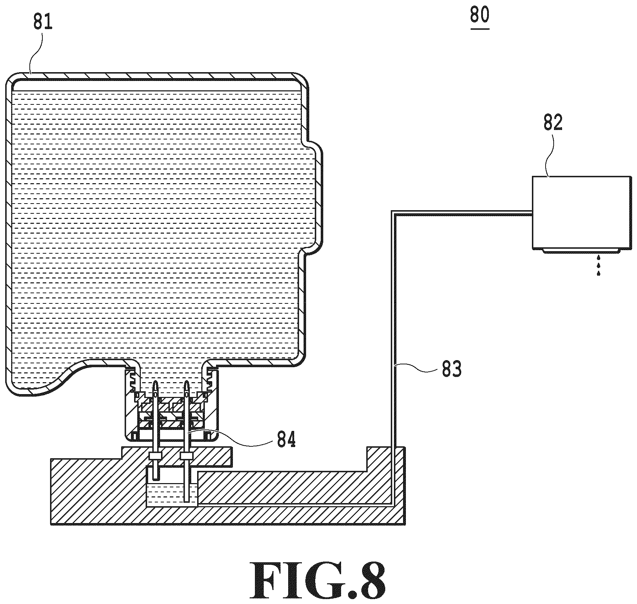

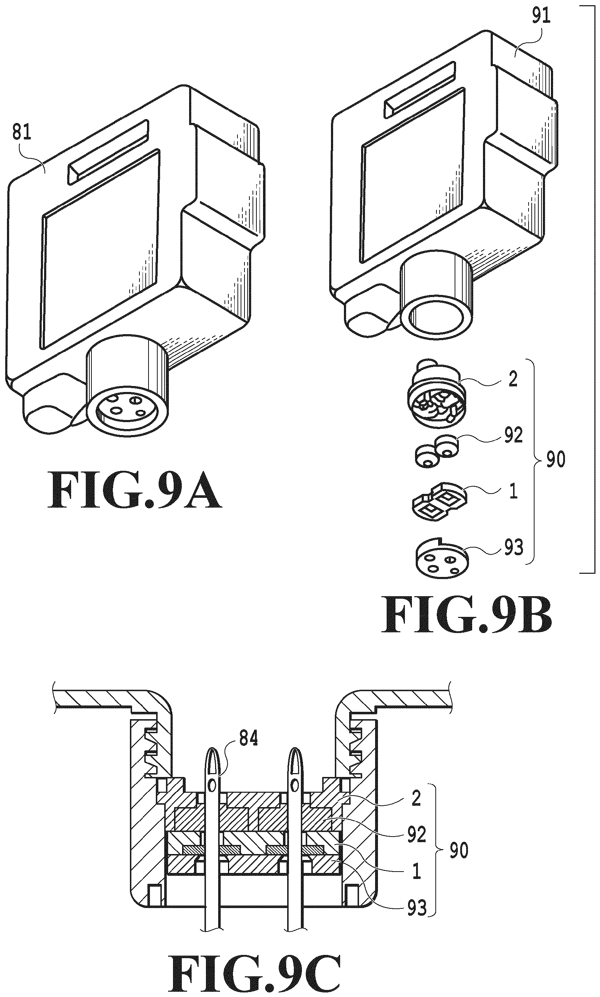

Fig. 8 is an overall diagram showing an inkjet printer 80. In the inkjet printer 80, a liquid storage container 81 retaining liquid and an inkjet printhead 82 communicate via a tube 83 and hollow needles 84. For such inkjet printer 80, it is useful to use the injection molding apparatus 38 (see Figs. 3A to 3E) to create, for example, a connection member 90 (Figs. 9B and 9C) used for a connection portion of the liquid storage container 81.

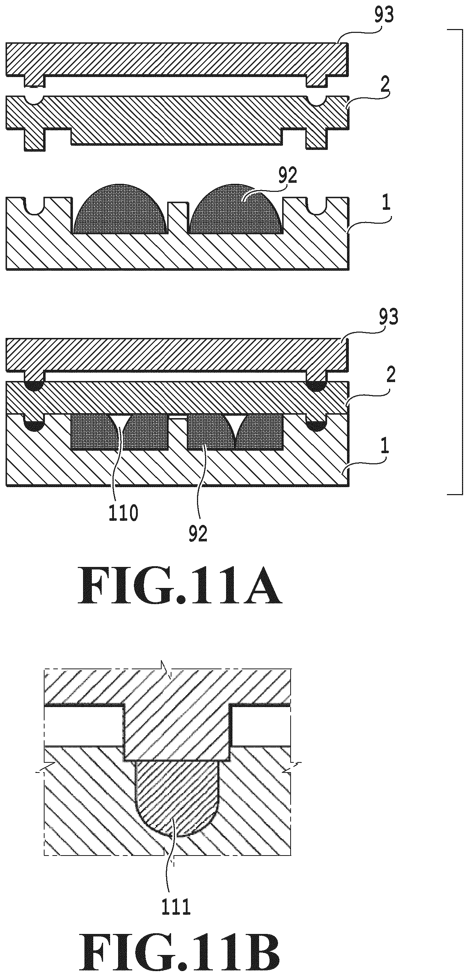

Figs. 9A to 9C are diagrams showing the liquid storage container 81, with Fig. 9A showing an outer appearance view, Fig. 9B showing an exploded perspective view, and Fig. 9C showing a partially enlarged view of the connection portion. The liquid storage container 81 includes a liquid storage portion 91 and the connection member 90. The connection member 90 has the first molded product 1, an elastic member 92, the second molded product 2, and a third molded product 93. The connection member 90 provides the function of a valve capable of retaining and supplying liquid by insertion of the hollow needles 84 into the elastic member 92 with cuts 110 (Fig. 11A, as described herein).

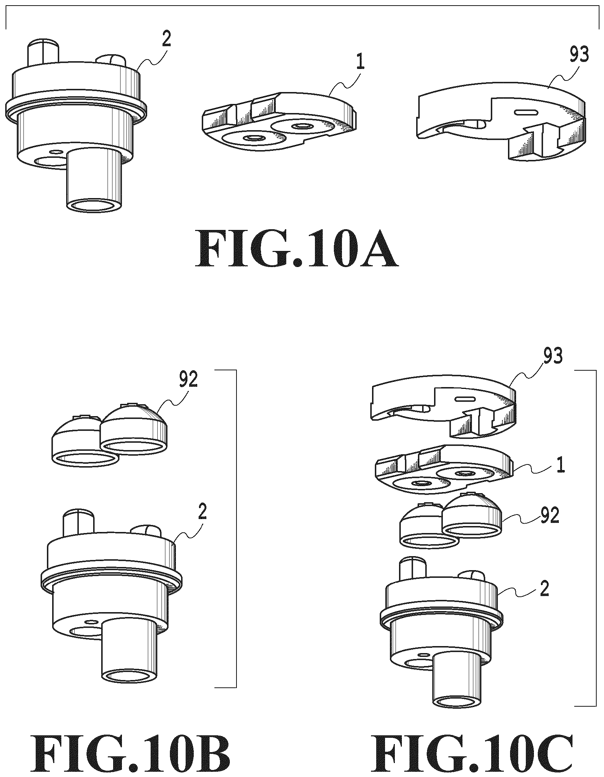

Figs. 10A to 10C are diagrams showing a method for manufacturing the connection member 90. In the present embodiment, the first molded product 1, the second molded product 2, and the third molded product 93 are formed by injection molding using the injection molding apparatus 38 (Fig. 10A). After that, the elastic member 92 is supplied to the second molded product 2 (Fig. 10B), and the first molded product 1 and the third molded product 93 are assembled on top and joined (Fig. 10C). Specifically, in the first step, the second molded product 2, the first molded product 1, and the third molded product 93 are formed by the primary molding. In the second step, the elastic member 92 is supplied to the second molded product 2, and the first molded product 1 and the third molded product 93 are assembled onto them. After that, in the third step, the second molded product 2, the first molded product 1, and the third molded product 93 are joined together by the secondary molding, and in the fourth step, the completed connection member 90 is removed. The connection member 90 can be manufactured through such a series of steps.

Figs. 11A and 11B are sectional views showing the first molded product 1, the second molded product 2, and the third molded product 93 in the joining step. In the joining in the third step, molten resin 111 is injected into spaces formed between the molded products, thereby forming the molded products into one molded product. In the injecting of the molten resin 111 into the spaces, the molded products are properly pressure-welded while mold closing force is used to compress the elastic member 92, so that the molded products can be retained stably during the injecting and the cooling of the molten resin 111. No additional equipment is therefore needed for the compression.

Other embodiments of the present disclosure are described below with reference to the drawings. Because the present embodiments have the same basic configuration as the first embodiment, only the different configurations are described, with similar configurations being incorporated by reference, to avoid unnecessary repetition.

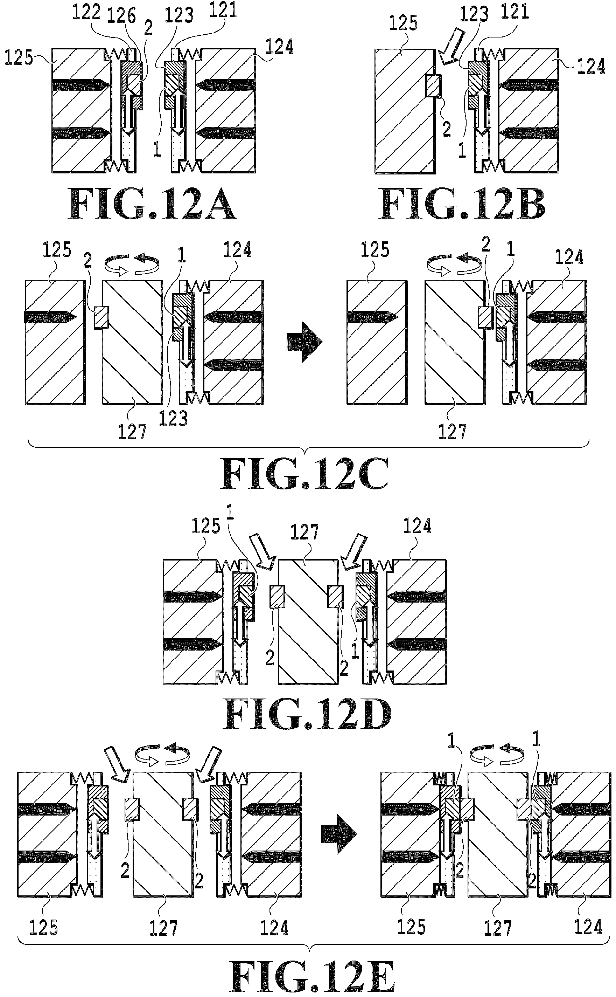

Figs. 12A to 12E are diagrams showing other embodiments. Fig. 12A shows a configuration where a first mold 124 includes a plate 121 and a second mold 125 includes a plate 122. In other words, in this configuration, the first mold 124 and the second mold 125 each have a respective plate to make their respective mold inserts movable. Fig. 12B shows a configuration where the second molded product 2 molded using a different apparatus is supplied to the second mold 125 and is then joined to the first molded product 1 formed by the first mold 124. The second molded product 2 may be formed of a material different from the material that forms the first molded product 1 or may be a composite of different type molded products.

Fig. 12C shows a configuration in which an intermediate mold 127 is disposed between the first mold 124 and the second mold 125. The second molded product 2 is formed by the second mold 125 and the intermediate mold 127, and the intermediate mold 127 is rotated to move the second molded product 2 left in the intermediate mold 127 to a position facing the first molded product 1 included in a mold insert 123 of the first mold 124. After that, the secondary molding is performed to join the first molded product 1 and the second molded product 2. In this event, there may be more than one second molded product 2 formed between the second mold 125 and the intermediate mold 127. Also, the second molded product 2 molded by the primary molding may be formed of a material different from the material that forms the first molded product 1 or may be a composite of a different type molded products.

Fig. 12D shows a configuration in which the intermediate mold 127 is disposed in the configuration in Fig. 12A. The intermediate mold 127 does not rotate. Instead, a different apparatus is used to supply the intermediate mold 127 with a molded product, a member of a different type, or a composite product combining various articles that may be of different types. This enables molding to be performed both between the first mold 124 and the intermediate mold 127 and between the second mold 125 and the intermediate mold 127 in the secondary molding. The shape may be the same or different between the set of the first mold 124 and the intermediate mold 127 and the set of the second mold 125 and the intermediate mold 127.

Fig. 12E shows a configuration where the intermediate mold 127 is rotatable in the configuration in Fig. 12D. As with the configuration in Fig. 12D, a different apparatus is used to supply the intermediate mold 127 with members of a different type formed of a material that is different from the material that forms the first molded product 1 or may be composites of different type molded products. After that, the intermediate mold 127 is rotated to move the molded products supplied thereto to positions facing positions on the first mold 124 and the second mold 125 where the secondary molding is performed. This enables molding to be performed both by the first mold 124 and the intermediate mold 127 and by the second mold 125 and the intermediate mold 127. After the molding, the completed product produced by the secondary molding may be discharged by rotating the intermediate mold 127 by 90°.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An article manufacturing method, comprising:
molding a first product (1) by closing a first mold onto a second mold (35) and injecting molten resin into a first mold (34) insert of the first mold wherein at least one injection unit (30) provided at the first mold injects the molten resin;
joining the first product to a second molded product (2) at the second mold (35);
separating a first plate (31) including the first mold (34) insert from the first mold (34), as the first mold (34) and the second mold (35) are opened; and
moving the first mold insert (37) to a position where the first product and the second molded product (2) face each other.

2. The article manufacturing method according to claim 1, wherein
the moving the first mold (34) is performed by sliding the first mold insert (37) along the first mold (34).

3. The article manufacturing method according to claim 1, wherein
the moving the first mold (34) is performed by rotating the first plate (31).

4. The article manufacturing method according to claim 2 or 3, wherein,
for the molding of the first product, a first injection unit (30) of the at least one injection unit provided at the first mold (34) performs injection, and
after moving the first mold (34), a second injection unit of the at least one injection unit provided at the first mold (34) performs injection to join the first product to the second molded product (2).

5. The article manufacturing method according to claim 1, wherein
the second molded product (2) is molded by a third injection unit (30), and
the first product and the second molded product (2) are joined.

6. The article manufacturing method according to claim 5, wherein
the third injection unit (30) is provided at the second mold (35).

7. The article manufacturing method according to claim 2, further comprising sliding a second mold insert (27) of the second mold.

8. The article manufacturing method according to claim 7, wherein
the at least one injection unit provided at the first mold (34) includes
a first ejection unit (30) that performs injection to the first mold insert, and
a second ejection unit (33) that performs injection to the second mold insert (27).

9. The article manufacturing method according to claim 4, further comprising:
a first separate mold insert (691) that covers an injection end portion of the first injection unit and separates the first injection unit (30) from the first mold insert as the first mold (64) and the second mold (65) are opened.

10. The article manufacturing method according to claim 9, further comprising:
a second separate mold insert (692) configured to cover an injection end portion of the second injection unit (33) and to separate the second injection unit from the first mold insert as the first mold (64) and the second mold (65) are opened, after the first product is joined to the second molding product (2).

11. The article manufacturing method according to claim 5 or 9, wherein
the second molded product (2) is a composite formed of different types of molded products.

12. The article manufacturing method according to claim 6, wherein
molten resin injected from the third injection unit to form the second molded product (2) is different from the molten resin that the first product (1).

13. The article manufacturing method according to claim 7, further comprising:
a second plate (122) included in the second mold insert (126), wherein separating of the second plate (122) from the second mold (125) is performed with the separating of the first plate from the first mold.

14. An article manufacturing method comprising:
molding a first product by closing a first mold onto a second mold (125) and an intermediate mold (127), the intermediate mold (127) being provided between the first mold (124) and the second mold (125);
injecting molten resin from at least one injection unit provided at the first mold (124) into a first mold insert (123) of the first mold (124);
joining the first product to a second molded product (2) at the second mold (125):
separating a first plate including the first mold insert (123) from the first mold (124) as the first, second and intermediate molds are opened; and
moving the first mold (124) insert to a position where the first product and the second molded product (2) face each other.

15. The article manufacturing method according to claim 14, further comprising rotating the intermediate mold (127) after joining the first product to the second molded product (2).
